(19) Europäisches Patentamt
European Patent Office
Office européen des brevets

(11)  **EP 1 613 846 B1**

(12)  **FASCICULE DE BREVET EUROPEEN**

(45) Date de publication et mention
de la délivrance du brevet:
**04.08.2010 Bulletin 2010/31**

(51) Int Cl.:
***F01N 3/022*** *(2006.01)*

(21) Numéro de dépôt: **04742430.4**

(22) Date de dépôt: **02.04.2004**

(86) Numéro de dépôt international:
**PCT/FR2004/000836**

(87) Numéro de publication internationale:
**WO 2004/090293 (21.10.2004 Gazette 2004/43)**

(54) **BLOC FILTRANT POUR LA FILTRATION DE PARTICULES CONTENUES DANS LES GAZ D' ECHAPPEMENT D' UN MOTEUR A COMBUSTION INTERNE.**

FILTERBLOCK ZUR PARTIKELFILTERUNG IM ABGAS EINES VERBRENNUNGSMOTORS

FILTER BLOCK FOR FILTERING PARTICLES CONTAINED IN THE EXHAUST GAS OF A COMBUSTION ENGINE

(84) Etats contractants désignés:
**AT BE BG CH CY CZ DE DK EE ES FI FR GB GR HU IE IT LI LU MC NL PL PT RO SE SI SK TR**

(30) Priorité: **04.04.2003 FR 0304214**

(43) Date de publication de la demande:
**11.01.2006 Bulletin 2006/02**

(73) Titulaire: **Saint-Gobain Centre de Recherches et d'Etudes Européen 92400 Courbevoie (FR)**

(72) Inventeurs:
• **BARDON, Sébastien**
 **F-69006 Lyon (FR)**
• **GLEIZE, Vincent**
 **F-84450 Saint-Saturnin les Avignon (FR)**

(74) Mandataire: **Sartorius, Jérome et al Cabinet Nony et Associés 3, rue de Penthièvre 75008 Paris (FR)**

(56) Documents cités:
**EP-A- 1 217 185      DE-A- 4 137 738
FR-A- 2 823 253      US-A- 4 416 676
US-A- 4 519 820**

**Description**

L'invention se rapporte à un bloc filtrant et à un corps filtrant formé par assemblage d'une pluralité de blocs filtrants, utilisés pour la filtration de particules contenues dans les gaz d'échappement d'un moteur à combustion interne, en particulier du type diesel.

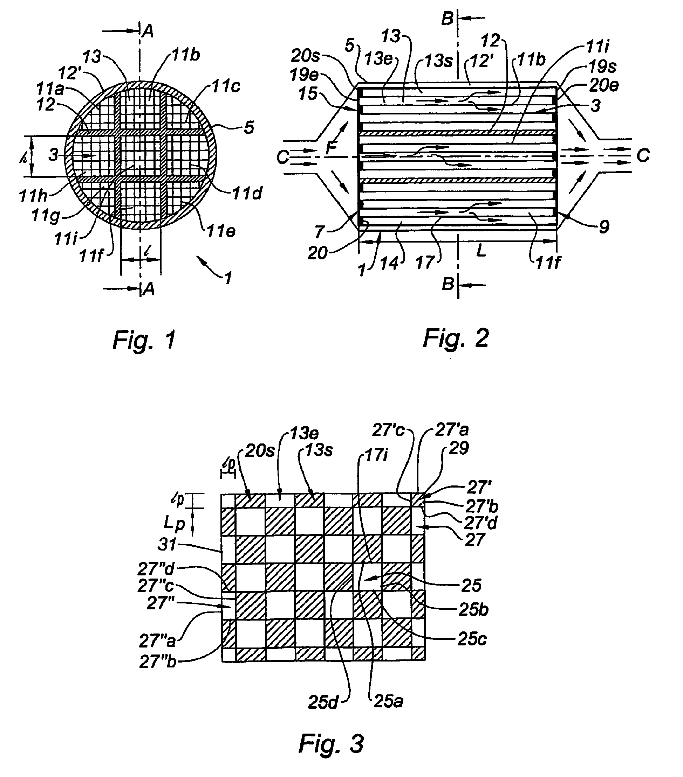

Classiquement, avant d'être évacués à l'air libre, les gaz d'échappement peuvent être purifiés au moyen d'un filtre à particules tel que celui représenté sur les figures 1 et 2, connu de la technique antérieure.

Un filtre à particules 1 est représenté sur la figure 1 en coupe transversale, selon le plan de coupe B-B représenté sur la figure 2, et, sur la figure 2, en coupe longitudinale selon le plan de coupe A-A représenté sur la figure 1.

Le filtre à particules 1 comporte classiquement au moins un corps filtrant 3, inséré dans une enveloppe métallique 5, destiné à être traversé, depuis une face amont 7 jusqu'à une face aval 9, par les gaz d'échappement.

Le corps filtrant 3 comporte généralement une pluralité de blocs filtrants 11a-11i constitués de structures poreuses en nid d'abeille, classiquement en céramique (cordiérite, carbure de silicium,...), assemblés entre eux par collage au moyen de joints 12 en ciment céramique. Les joints 12, sensiblement étanches aux gaz, ont classiquement une épaisseur d'environ 1 mm. Le ciment céramique est généralement constitué de silice et/ou de carbure de silicium et/ou de nitrure d'aluminium.

L'assemblage ainsi constitué peut être ensuite usiné pour prendre la section souhaitée, ronde ou ovoïde par exemple. Le corps filtrant 3 représenté sur les figures 1 et 2 a la forme d'un cylindre d'axe C-C.

Parmi les blocs filtrants, on distingue les blocs filtrants intérieurs 11i et les blocs filtrants extérieurs 11a-11h. A la différence des blocs filtrants intérieurs 11 i, les blocs filtrants extérieurs 11a-11h sont adjacents à l'enveloppe 5. Classiquement, un matériau 12', étanche aux gaz d'échappement, est disposé entre les blocs filtrants extérieurs 11 a-11 h et l'enveloppe 5.

Un bloc filtrant 11a-11i est classiquement sensiblement parallélépipédique rectangle, de longueur L, de largeur l et de hauteur h. Il comporte une pluralité de canaux 13 rectilignes, parallèles, adjacents les uns aux autres, et de même section transversale carrée. L'espace intérieur 14 d'un canal 13 est délimité par une paroi latérale 17 débouchant vers l'extérieur par une ouverture 19 et obturée, à l'extrémité opposée à l'ouverture 19, par un bouchon d'obturation 20.

On distingue deux types de canaux. Les canaux d'entrée 13e comportent un bouchon 20e sur la face aval 9 et une ouverture 19e sur la face amont 7. Les canaux de sortie 13s comportent un bouchon 20s sur la face amont 7 et une ouverture 19s sur la face aval 9.

Les canaux d'entrée 13e et de sortie 13s sont disposés en alternance, dans la largeur 1 et dans la hauteur h du bloc flitrant.

Comme on le voit sur la figure 2, le flux F des gaz d'échappement entre dans le corps filtrant 3 par les ouvertures 19e des canaux d'entrée 13e, traverse les parois latérales 17 de ces canaux pour rejoindre les canaux de sortie 13s, puis s'échappe vers l'extérieur par les ouvertures 19s. On appelle « zone de filtration » d'une paroi latérale 17 la surface de cette paroi traversée par les gaz d'échappement.

Tout passage des gaz à travers le bloc filtrant s'accompagne d'une perte de charge, principalement due au passage des gaz à travers les zones de filtration. Il est souhaitable de minimiser cette perte de charge.

Pour un même débit de gaz entrant dans le filtre, la perte de charge est généralement d'autant plus faible que les zones de filtration des canaux sont étendues. En effet, une grande zone de filtration signifie, pour un canal d'entrée, une grande surface disponible pour la traversée des gaz, et, pour un canal de sortie comme pour un canal d'entrée, généralement une grande section transversale limitant la perte de charge lors de la circulation des gaz dans le canal. Un compromis est cependant nécessaire pour prendre en compte les contraintes d'encombrement, de poids et de coûts. Pour optimiser ce compromis, le filtre est donc adapté en fonction de la perte de charge admissible dans son application.

US 4,519,820 décrit un corps filtrant monolithique cylindrique. La section transversale des canaux périphériques de ce corps est déterminée par la surface extérieure cylindrique de ce corps.

La demande de brevet FR 0104686. déposée par la Demanderesse, propose par ailleurs un corps filtrant comportant une partie centrale et une partie périphérique ayant des densités de canaux différentes et adaptées pour équilibrer la perte de charge en différents points du corps filtrant.

En dépit de ces améliorations, il existe un besoin permanent pour des solutions permettant de réduire encore la perte de charge à travers le filtre tout en respectant les contraintes d'encombrement.

Le but de l'invention est de fournir un bloc filtrant apte à limiter la perte de charge résultant de la traversée du filtre par les gaz.

Selon l'invention, on atteint ce but au moyen d'un bloc filtrant selon la revendication 1.

Comme on le verra plus en détail dans la suite de la description, l'adaptation de l'ouverture d'un canal en fonction de la surface de sa paroi utilisée à la filtration, en particulier l'adaptation des ouvertures des canaux périphériques dont les rapports F/P sont différents de 1, favorise une uniformisation des vitesses des gaz dans ce canal et dans la pluralité des canaux qui lui sont adjacents, ce qui facilite la circulation des gaz à travers le filtre. Il en résulte avantageusement une perte de charge réduite.

Selon d'autres caractéristiques préférées de l'invention,

-  tout canal dudit groupe est conformé de préférence de manière que

$$\text{(II)} \qquad O/F = R_{seuil}.$$

où $R_{seuil}$ est une valeur de seuil, déterminée par exemple en fonction de l'application prévue dudit bloc filtrant ;

-  ledit groupe ne comporte que des canaux débouchant à proximité les uns des autres, ou que des canaux d'entrée, ou que des canaux de sortie desdits gaz, ou encore comporte tous les canaux dudit bloc filtrant :

-  lesdits canaux dudit bloc filtrant étant sensiblement parallèles, adjacents les uns aux autres, le rapport $O_p/O_i$ de la surface $O_p$ de l'ouverture d'un canal périphérique à la surface $O_i$ de l'ouverture d'un canal intérieur qui lui est adjacent est compris entre 0,2 et 0,75. Deux canaux sont dits « adjacents » quand ils comportent une portion de paroi latérale commune, éventuellement sous la forme d'une arête commune. Dans ce dernier cas, la portion de paroi latérale commune se limite à une ligne de contact. De préférence, quand ledit canal périphérique est un canal d'angle, c'est-à-dire s'étendant le long d'une arête longitudinale dudit bloc filtrant, le rapport $O_p/O_i$ est compris entre 0,2 et 0,3, de préférence encore est sensiblement égal à 0,25. De préférence, quand ledit canal périphérique est un canal périphérique latéral, c'est-à-dire est positionné le long d'une seule face du bloc filtrant, ledit rapport $O_p/O_i$ est compris entre 0,4 et 0,6, de préférence est sensiblement égal à 0,5 ;

-  les sections desdits canaux intérieurs d'entrée et/ou de sortie, dans un plan perpendiculaire à la direction desdits canaux, sont toutes identiques ou sont différentes selon qu'un canal est un canal d'entrée ou un canal de sortie.

L'invention concerne également un corps filtrant destiné à un filtre à particules, et comportant au moins un bloc filtrant conforme à l'invention.

La description qui va suivre, faite en se référant aux dessins annexés, permettra de mieux comprendre et apprécier les avantages de l'invention. Dans ces dessins :

-  la figure 1 représente un filtre à particules selon la technique antérieure, en coupe transversale selon le plan de coupe B-B représenté sur la figure 2 ;

-  la figure 2 représente le même filtre à particules, en coupe longitudinale selon le plan de coupe A-A représenté sur la figure 1 ;

-  la figure 3 représente une vue de la face amont 7 d'un bloc filtrant selon le mode de réalisation préféré de l'invention.

Sur ces figures, non limitatives, les différents éléments (parois, joints, blocs filtrants, bouchons d'obturation,...) ne sont pas nécessairement représentés à la même échelle. Des références identiques ont été utilisées sur les différentes figures pour désigner des éléments identiques ou similaires.

Les figures 1 et 2 ayant été décrites en préambule, on se reporte à la figure 3.

Les bouchons 20s des canaux de sortie 13s sont représentés hachurés.

On distingue des canaux intérieurs 25 et des canaux périphériques 27.

Les canaux intérieurs 25 ont une section transversale, c'est-à-dire dans un plan perpendiculaire à la direction C-C des canaux, carrée, chaque côté de la section ayant une longueur Lp. Les canaux intérieurs 25 débouchent vers l'extérieur par des ouvertures ayant une surface $O_i$. Les quatre faces 25a, 25b, 25c et 25d de la paroi latérale $17_i$ d'un canal intérieur 25 d'entrée ou de sortie sont chacune adjacentes à un canal de sortie ou d'entrée, respectivement. La surface $F_i$ de la zone de filtration de la paroi latérale $17_i$ est donc formée par les quatre faces 25a-25d, et est ainsi sensiblement égale à la surface $P_i$ de cette paroi. Ainsi $F_i/P_i \cong 1$.

Les canaux périphériques 27 comportent au moins une face adjacente à l'extérieur du bloc. Parmi les canaux périphériques 27, on distingue les canaux d'angle 27' et les canaux latéraux 27". Les canaux d'angle 27' s'étendent le long des arêtes longitudinales 29 du bloc filtrant. Les canaux latéraux 27" sont, à la différence des canaux d'angle 27', positionnés le long d'une seule face extérieure 31 du bloc filtrant. Les canaux périphériques d'angle 27' et latéraux 27" débouchent vers l'extérieur par des ouvertures ayant des surfaces $O_p'$ et $O_p"$, respectivement.

Les canaux d'angle 27' ont une section carrée, chaque côté ayant une longueur $I_p$. Les canaux latéraux 27" ont une section rectangulaire, la longueur du petit côté étant égale à $I_p$, la longueur du grand côté étant égale à Lp.

Les parois latérales des canaux d'angle 27' et des canaux latéraux 27" ont des surfaces respectives $P_p' = L.4.I_p$ et $P_p" = L.(2.I_p+2.L_p)$. Elles comportent deux faces, $27_a'$ et $27_b'$, et une face $27_a"$, respectivement, adjacentes à l'extérieur du bloc filtrant, les autres faces $27_c'$ et $27_d'$, et $27_b"$, $27_c"$ et $27_d"$, respectivement, étant adjacentes à d'autres canaux.

Comme décrit en préambule, les blocs filtrants 11a-11i sont solidarisés les uns aux autres par un joint 12 en ciment sensiblement étanche aux gaz d'échappement à filtrer. Les canaux périphériques 27 des blocs filtrants extérieurs 11 a-11 h du corps filtrant 3 adjacents à l'enveloppe 5 sont quant à eux isolés de l'extérieur par le matériau 12' étanche aux gaz d'échappement

Les faces extérieures $27_a'$ et $27_b'$ d'une part, et $27_a''$ d'autre part, en contact avec le joint 12 ou le matériau étanche 12' ne permettent donc pas le passage des gaz à filtrer et sont des zones non filtrantes des parois latérales des canaux 27' et 27", respectivement. Les zones de filtration des parois latérales des canaux 27' et 27" ont donc des surfaces $F_p'$ et $F_p''$, respectivement, formées par les autres faces $27_c'$ et $27_d'$, et $27_b''$, $27_c''$ et $27_d''$, respectivement, et donc égales à $L2.l_p$ et $L.(L_p+2.l_p)$, respectivement.

Considérons un groupe de canaux comportant au moins deux canaux dont les rapports F/P respectifs entre surface F de zone de filtration et surface P de paroi sont différents, par exemple un groupe de canaux comportant un canal intérieur 25, un canal périphérique d'angle 27' et un canal périphérique latéral 27".

$$F_p'/P_p' \neq F_p''/P_p'' \neq F_i/P_i$$

Selon l'invention, un canal dudit groupe de canaux comporte une ouverture dont la surface O est d'autant plus grande que la surface F de ladite zone de filtration dudit canal est grande. Comme $F_p' < F_p'' < F_i$, on a donc $O_p' < O_p'' < O_i$.

De préférence, tout canal dudit groupe est conformé de manière que

$$\text{(I)} \qquad 0,9*R_{seuil} < O/F < 1,1* R_{seuil},$$

où $R_{seuil}$ est une valeur de seuil, de préférence encore de manière que

$$\text{(II)} \qquad O/F = R_{seuil}.$$

Donc, dans le mode de réalisation préféré de l'invention, $R_{seuil} = O_p'/F_p' = O_p''/F_p'' = O_i/F_i$. C'est-à-dire $R_{seuil} = l_p.l_p/(L.2.l_p) = l_p.L_p/(L.(L_{·p}+2.l_p)) = L_p.L_p/(L.4.L_p)$, ce qui conduit à $l_p = 0,5.L_p$.

Donc $O_p' = l_p.l_p = 0,25.L_p.L_p = 0,25.O_i$, et $O_p'' = L_p.l_p = 0,5.L_p.L_p = 0,5.O_i$

Selon l'invention, le rapport $O_p'/O_i$ est donc de préférence compris entre 0,2 et 0,3, de préférence sensiblement égal à 0,25, et le rapport $O_p''/O_i$ est compris entre 0,4 et 0,6, de préférence sensiblement égal à 0,5.

On suppose que le flux de gaz à filtrer arrive à une vitesse sensiblement uniforme sur la face amont 7 des blocs filtrants représentés sur les figures 1, 2 et 3.

La section des canaux des blocs filtrants selon la technique antérieure (figures 1 et 2) est adaptée pour optimiser le compromis entre encombrement et perte de charge lors de la traversée des gaz entrant et sortant par des canaux intérieurs 25. Autrement dit, les canaux intérieurs 25, en particulier leurs ouvertures, sont conformées de manière que la perte de charge lors de la filtration du gaz soit inférieure mais proche d'une perte de charge limite admissible.

Selon la technique antérieure, les canaux périphériques d'entrée et de sortie ont généralement des ouvertures identiques à celles des canaux intérieurs d'entrée, mais des surfaces de zone de filtration inférieures. Les zones de filtration des canaux périphériques d'entrée ne suffisent donc pas à filtrer tout le gaz se présentant aux ouvertures des canaux périphériques, ce qui produit une surpression en amont de ces ouvertures et une perte de charge préjudiciable. En outre, les canaux périphériques de sortie, recevant moins de gaz filtré que les canaux intérieurs, ont des ouvertures sur-dimensionnées.

Selon l'invention, la surface des ouvertures des canaux périphériques est réduite pour tenir compte du fait que la zone de filtration, ne couvrant pas toute la surface de leur paroi latérale, est elle-même réduite par rapport à celle des canaux intérieurs.

Le débit de gaz entrant ou sortant d'un canal étant sensiblement proportionnel à la surface de l'ouverture de ce dernier et la surface de cette ouverture étant adaptée à la zone de filtration du canal, il résulte de l'invention une homogénéisation des vitesses des gaz dans les différents canaux. La perte de charge induite par le filtre est donc réduite.

Il résulte de l'ajustement des ouvertures des canaux périphériques un gain de volume qui peut être répercuté par l'ajout de canaux intérieurs supplémentaires. A encombrement identique, un bloc filtrant selon l'invention entraîne donc une perte de charge inférieure à celle induite par un bloc filtrant selon la technique antérieure. A perte de charge

**EP 1 613 846 B1**

identique, un bloc filtrant selon l'invention est moins encombrant qu'un bloc filtrant selon la technique antérieure.

Généralement, le flux du gaz incident n'est pas uniforme, en particulier la pression du gaz incident est différente selon l'emplacement du canal considéré dans un bloc filtrant et selon l'emplacement du bloc filtrant au sein du corps filtrant.

Dans cette situation, il conviendra de n'appliquer les formules (I) et (II) qu'à un groupe de canaux limité à des canaux dont les ouvertures sont traversées par des flux de gaz se présentant avec une composition et/ou une pression sensiblement identiques. De préférence, le groupe de canaux est donc limité à des canaux débouchant à proximité les uns des autres.

De préférence, le rapport $O_p/F_p$ d'un canal périphérique sera tel que

$$(III) \qquad 0,9* O'_i/F'_i < O_p/F_p < 1,1* O'_i/F'_i,$$

$O'_i$ désignant la surface de l'ouverture d'un canal intérieur adjacent audit canal périphérique, $F'_i$ désignant la surface de la zone de filtration dudit canal intérieur. De préférence, ledit canal intérieur adjacent est un canal du même type que ledit canal périphérique.

Bien entendu, la présente invention n'est pas limitée aux modes de réalisation décrits et représentés ci-dessus, fournis à titre illustratif et non limitatif.

Ainsi l'invention concerne également un corps filtrant monolithique. Le bloc filtrant pourrait avoir une forme quelconque.

La section des canaux n'est pas limitée à la forme carrée. La section des canaux d'entrée pourrait également être différente de celle des canaux de sortie. La forme générale des sections des canaux périphériques pourrait encore être différente de celle des sections des canaux intérieurs. La section transversale d'un canal pourrait aussi évoluer, périodiquement ou non, le long de ce canal.

Enfin, l'ouverture d'un canal pourrait être ne pas être plane ou ne pas être perpendiculaire à l'axe du canal.

**Revendications**

1. Bloc filtrant pour la filtration de particules contenues dans les gaz d'échappement d'un moteur à combustion interne, comprenant un groupe de canaux de circulation desdits gaz, lesdits canaux pouvant être classés en canaux « périphériques » et en canaux « intérieurs » selon qu'ils comportent ou pas, respectivement, une zone non filtrante exposée vers l'extérieur dudit bloc filtrant, un canal dudit groupe de canaux comportant une ouverture vers l'extérieur dont la surface est d'autant plus grande que la surface de la zone de filtration dudit canal est grande, ledit groupe comportant des premier et deuxième canaux délimités par des parois de surfaces $P_i$ et $P_p$, respectivement, pourvues de zones de filtration de surfaces $F_i$ et $F_p$, respectivement, tels que $F_p/P_p$ est différent de $F_i/P_i$, lesdits premier et deuxième canaux étant des canaux intérieur et périphérique, respectivement débouchant vers l'extérieur par des ouvertures $O_i$ et $O_p$, respectivement, **caractérisé en ce que**, quels que soient lesdits premier et deuxième canaux dudit groupe considérés,

$$(I) \qquad 0,9*O_i/F_i < O_p/F_p < 1,1* O_i/F_i.$$

2. Bloc filtrant selon la revendication 1, **caractérisé en ce que**

$$(II) \qquad O_i/F_i = O_p/F_p.$$

3. Bloc filtrant selon l'une quelconque des revendications précédentes, **caractérisé en ce que** ledit groupe ne comporte que des canaux débouchant à proximité les uns des autres.

4. Bloc filtrant selon l'une quelconque des revendications précédentes, **caractérisé en ce que** ledit groupe ne comporte que des canaux d'entrée, ou que des canaux de sortie desdits gaz.

5. Bloc filtrant selon l'une quelconque des revendications 1 et 2, **caractérisé en ce que** ledit groupe comporte tous les canaux dudit bloc filtrant.

**5**

**6.** Bloc filtrant selon l'une quelconque des revendications précédentes, **caractérisé en ce que** lesdits canaux dudit bloc filtrant étant sensiblement parallèles, adjacents les uns aux autres, **caractérisé en ce que** le rapport $O_p/O_i$ de la surface $O_p$ de l'ouverture (20e,20s) d'un canal périphérique à la surface $O_i$ de l'ouverture d'un canal intérieur qui lui est adjacent est compris entre 0;2 et 0.75.

**7.** Bloc filtrant selon la revendication 6, **caractérisé en ce que** ledit rapport $O_p/O_i$ est compris entre 0,2 et 0,3.

**8.** Bloc filtrant selon l'une des revendications 6 et 7, **caractérisé en ce que** ledit canal périphérique est un canal d'angle.

**9.** Bloc filtrant selon la revendication précédente, dans lequel ledit canal périphérique a une section carrée.

**10.** Bloc filtrant selon la revendication 6, **caractérisé en ce que** ledit rapport $O_p/O_i$ est compris entre 0,4 et 0,6.

**11.** Bloc filtrant selon l'une des revendications 6 et 7, **caractérisé en ce que** ledit canal périphérique est un canal périphérique latéral.

**12.** Bloc filtrant selon l'une quelconque des revendications précédentes, **caractérisé en ce que** les sections desdits canaux intérieurs d'entrée et/ou de sortie, dans un plan perpendiculaire à la direction desdits canaux, sont toutes identiques.

**13.** Bloc filtrant selon l'une quelconque des revendications 1 à 11, **caractérisé en ce que** les sections desdits canaux intérieurs, dans un plan perpendiculaire à la direction desdits canaux, sont différentes selon qu'un canal est un canal d'entrée ou un canal de sortie.

**14.** Bloc filtrant selon l'une quelconque des revendications précédentes, présentant une forme sensiblement parallélépipédique rectangle.

**15.** Corps filtrant destiné à un filtre à particules, **caractérisé en ce qu'**il comporte au moins un bloc filtrant conforme à l'une quelconque des revendications précédentes.

**Claims**

**1.** Filter block for the filtration of particles present in the exhaust gases of an internal combustion engine, comprising a group of flow channels for said gases, said channels being substantially parallel, adjacent to one another, and being classifiable as "peripheral" channels and "internal" channels according to whether they do or do not comprise, respectively, a non filtering zone exposed toward the outside of said filter block, a chancel of said group of channels having an opening toward the outside whose area is larger, the larger the filtration zone area of said channel, said group comprising at least a first and a second channels bounded by walls which areas are $P_i$ and $P_p$, respectively, provided with filtration zones which areas are $F_i$ and $F_p$, respectively, so that $F_p/P_p$ is different than $F_i/P_i$, said first and second channels being internal and peripheral channels, respectively, terminating outwardly in openings $O_i$ and $O_p$, respectively, **characterized in that**, for any of said first and second channels of said group,

$$(I) \qquad 0,9*O_i/F_i < O_p/F_p < 1,1*O_i/F_i$$

**2.** Filter block according to claim 1, wherein

$$(II) \qquad O_i/F_i = O_p/F_p$$

**3.** Filter block according to any one of the preceding claims, **characterized in that** said group only comprises channels terminating near one another.

**4.** Filter block according to any one of the preceding claims, **characterized in that** said group only comprises inlet channels, or only outlet channels for said gases.

**5.** Filter block according to any one of claims 1 and 2, **characterized in that** said group comprises all the channels of said filter block.

**6.** Filter block according to any one of the preceding claims, said channels of said filter block being substantially parallel, adjacent to one another, **characterized in that** the $O_p/O_i$ ratio of the area $O_p$ of the opening (20e,20s) of a peripheral channel to the area $O_i$ of the opening of an internal channel adjacent to it is between 0.2 and 0.75.

**7.** Filter block according to claim 6, **characterized in that** said $O_p/O_i$ ratio is between 0.2 and 0.3.

**8.** Filter block according to any one of claims 6 and 7, **characterized in that** said peripheral channel is a corner channel.

**9.** Filter block according to the preceding claim, **characterized in that** said peripheral channel has a square cross section.

**10.** Filter block according to claim 6, **characterized in that** said $O_p/O_i$ ratio is between 0.4 and 0.6.

**11.** Filter block according to any one of claims 6 and 7, **characterized in that** said peripheral channel is a lateral peripheral channel.

**12.** Filter block according to any one of the preceding claims, **characterized in that** the cross sections of said inlet and/or outlet internal channels, in a plane perpendicular to the direction of said channels, are all identical.

**13.** Filter block according to any one of claims 1 to 11, **characterized in that** the cross sections of said internal channels, in a plane perpendicular to the direction of said channels, are different according to whether a channel is an inlet channel or an outlet charnel.

**14.** Filter block according to the preceding claim, which is substantially rectangular parallelepiped

**15.** Filter body suitable for a particulate filter, **characterized in that** it comprises at least one filter block according to any one of the preceding claims.


**Patentansprüche**

**1.** Filterblock zur Filterung von Partikeln, welche in dem Abgas eines Verbrennungsmotors vorkommen, aufweisend eine Gruppe von Zirkulationskanälen für besagtes Gas, welche Kanäle in periphere Kanäle und innere Kanäle untergliedert werden können, je nachdem ob sie einen nichtfilternden Bereich aufweisen oder nicht, der dem Äußerem des besagten Filterblocks zugewandt ist, ein Kanal der besagten Gruppe weist eine Öffnung nach außen auf, dessen Fläche im gleichen Maße groß ist wie die Fläche des Filterungsbereichs des besagten Kanals groß ist, besagte Gruppe weist erste und zweite Kanäle, begrenzt durch Wände mit Flächen $P_i$ beziehungsweise $P_p$, auf, welche mit Filtrationszonen mit Flächen $F_i$ beziehungsweise $F_p$ ausgestattet sind, wobei $F_p/P_p$ unterschiedlich von $F_i/P_i$ ist, besagte erste und zweite Kanäle sind innere beziehungsweise periphere Kanäle und öffnen sich nach außen durch die Öffnungen $O_i$ beziehungsweise $O_p$, **dadurch gekennzeichnet, dass**, ganz gleich welche der besagten ersten und zweiten Kanäle der besagten Gruppe betrachtet werden,

$$(I) \quad 0,9*O_i/F_i < O_p/F_p < 1,1*O_i/F_i.$$

**2.** Filterblock nach Anspruch 1, **dadurch gekennzeichnet, dass**

$$(II) \quad O_i/F_i = O_p/F_p,$$

**3.** Filterblock nach einem beliebigen der vorherigen Ansprüche, **dadurch gekennzeichnet, dass** die besagte Gruppe nur Kanäle aufweist, welche sich in Nähe voneinander öffnet.

**4.** Filterblock nach einem beliebigen der vorherigen Ansprüche, **dadurch gekennzeichnet, dass** besagte Gruppe nur Eingangskanäle oder nur Ausgangskanäle des besagten Gases aufweist.

**5.** Filterblock nach einem beliebigen der Ansprüche 1 und 2, **dadurch gekennzeichnet, dass** besagte Gruppe alle Kanäle des besagten Filterblocks aufweist.

**6.** Filterblock nach einem beliebigen der vorherigen Ansprüche, **dadurch gekennzeichnet, dass** besagte Kanäle des besagten Filterblocks in etwa parallel, angrenzend zueinander sind, **dadurch gekennzeichnet, dass** das Verhältnis $O_p/O_i$ der Fläche $O_p$ der Öffnung (20e, 20s) eines peripheren Kanals zu der Fläche $O_i$ der Öffnung einen inneren Kanals, welcher benachbart ist, zwischen 0,2 und 0,75 liegt.

**7.** Filterblock nach Anspruch 6, **dadurch gekennzeichnet, dass** das besagte Verhältnis $O_p/O_i$ zwischen 0,2 und 0,3 liegt.

**8.** Filterblock nach einem der Ansprüche 6 und 7, **dadurch gekennzeichnet, dass** der besagte periphere Kanal ein Winkelkanal ist.

**9.** Filterblock nach vorherigem Anspruch, bei welchem der besagte periphere Kanal einen quadratischen Querschnitt aufweist.

**10.** Filterblock nach Anspruch 6, **dadurch gekennzeichnet, dass** besagtes Verhältnis $O_p/O_i$ zwischen 0,4 und 0,6 liegt.

**11.** Filterblock nach einem der Ansprüche 6 und 7, **dadurch gekennzeichnet, dass** besagter peripherer Kanal ein lateraler peripherer Kanal ist.

**12.** Filterblock nach einem beliebigen der vorherigen Ansprüche, **dadurch gekennzeichnet, dass** die Querschnitte besagter innerer Eingangs- und/oder Ausgangskanäle in einer Orthogonalebene zur Richtung besagter Kanäle alle identisch sind,

**13.** Filterblock nach einem beliebigen der Ansprüche 1 bis 11, **dadurch gekennzeichnet, dass** die Querschnitte besagter innerer Kanäle in einer Orthogonalebene zur Richtung besagter Kanäle unterschiedlich sind, je nachdem ob ein Kanal ein Eingangskanal oder eine Ausgangskanal ist.

**14.** Filterblock nach einem beliebigen der vorherigen Ansprüche, dessen Form in etwa ein quaderförmiges Rechteck aufweist.

**15.** Filterkörper bestimmt für einen Partikelfilter, **dadurch gekennzeichnet, dass** er mindestens einen Filterblock gemäß einem beliebigen der vorherigen Ansprüche aufweist.

Fig. 1

Fig. 2

Fig. 3

**EP 1 613 846 B1**

**RÉFÉRENCES CITÉES DANS LA DESCRIPTION**

**Documents brevets cités dans la description**

- US 4519820 A

- FR 0104686